# EUROPEAN PATENT APPLICATION

(11) **EP 4 841 005 A1**
(43) Date of publication of application: **18.11.2026**
(21) Application number: 25176469.2
(22) Date of filing: 14.05.2025
(51) Int. Cl.: D04H 1/4218, D04H 1/587, D04H 1/64

(54) **COVER LAYER, FIBER-BASED INSULATION PRODUCT, AND PRODUCTION METHOD**

(71) Applicant: Johns Manville, Denver, CO 80202 (US)
(72) Inventor: KETZER, Michael, 97903 Collenberg (DE)
(74) Representative: Patentanwälte Olbricht Buchhold Keulertz

(57) **Abstract**

The present invention relates to a cover layer and a fiber-based insulation product comprising at least one core layer, comprising insulation material, and at least one cover layer, comprising a nonwoven fiber mat, comprising mineral fibers and/or polymer fibers and a new binder composition comprising at least one polymer wax emulsion, preferably a thermoplastic emulsion, in particular the polymer wax emulsion being based on polyolefin and/or polyurethane and/or polyvinyl chloride (PVC) or polyethylene terephthalate (PET) or similar, and at least one base binder of polyvinyl alcohol or polyacrylate or polyvinyl acetate , or a combination thereof. Furthermore, the invention relates to a method for manufacturing a fiber-based insulation product.

## Description

The invention relates to a new fiber-based insulation product with a binder composition which is particularly suitable for the manufacture of composite materials utilizing such binder composition in the required nonwoven materials. Composite materials using such binder composition in their nonwoven parts are useful in the field of building insulation, in particular to nonwoven fiber mats used as facers in construction boards or insulation materials.

### BACKGROUND OF THE INVENTION

Composite materials are increasingly replacing traditional building materials as construction materials and must be adapted for manifold applications. Thus, on the one hand a sufficient mechanical stability is required and on the other hand a good workability and low weight are necessary and today sustainability combined with environmentally friendly aspects are important.

Mineral wool insultation elements are state of the art. Those materials are used for pitched roof, flat roof, especially for temperature insulation, and include external or internal walls. Special mineral wool panels are also used for flooring insulation.

For reinforcement of mineral wool panel surfaces glass fiber nonwoven or -grids, scrims or woven are applied. As connection between facer material and insulation panel an adhesive or binder system is used to bond the nonwoven, woven or scrim to the panel.

Different adhesives are applied, such as two-component resins, formaldehyde based systems, polyvinyl alcohol (PVA) and also thermoplastic materials based on polypropene (PP) or polyethylene (PE). These are applied either in powder form or in aqueous form by spraying or roller application or extrusion coating. They cure under the influence of heat and some pressure to form a bond. The curing of aqueous systems or two-component adhesives slows down the process and is complex to control.

Another disadvantage is that typically both the facer material and the insulation core have to run through separate manufacturing processes and are later adhered, resulting in higher manufacturing costs and complexity. The insulation core binder thus has to be consolidated via a insulation core heating consolidation process of more than 200 °C, the facer material independently at a similar temperature and afterwards the adhesion takes place via a third oven heating and consolidation.

US 2017/0268143 A1 discloses a method of forming a facer by forming a first layer of nonwoven glass fibers, positioning a second layer of reinforcement fibers atop the first layer, coating the layers with a binder composition, and pressing the layers together between rollers.

From an environmental perspective and for indoor air quality reasons, adhesives systems free of volatile organic substances (VOC) as aldehydes are desired.

A fibrous insulation product comprising a nonwoven fiber mat bound together by an aqueous binder composition including a thermally degradable polyol, a crosslinking agent, and an acid/aldehyde without added formaldehyde is known from US 2020/0095712 A1.

Conventional nonwoven fiber mats suffer from excessive bleed-through of a binder composition due to their inherent porosity, leading to reduced insulation performance and structural integrity. Thus, existing binder compositions and reinforcement fibers used in nonwoven fiber mats may not provide sufficient adhesion, durability, and sustainability for certain applications.

Another aspect when choosing a covering material or cover layer is the ability to prevent the insulation material from taking up humidity by air condensation from the outside to the inside or vice versa since moistened panels loose insulation performance.

Rigid polymeric foam insulation boards have been widely used in the construction industry for various applications, such as commercial roof insulation, residential insulation, and sheathing under siding. These insulation boards typically consist of a core polymeric foamed thermoset material, such as polyurethane, polyisocyanurate, or phenolic resin, applied between two facing sheets. Traditionally, the facing sheets have been nonwoven fiber mats, including nonwoven fiberglass mats coated with binder coatings. However, conventional nonwoven fiberglass mats suffer from excessive bleed-through of the binder coating due to their inherent porosity.

Nonwoven fiber mats are generally formed by randomly matted glass fibers bonded together by a cured thermoset or dried binder. The nonwoven fiber mat and insulation core are typically manufactured separately and then adhered together using an adhesive binder and oven consolidation process. While these mats provide some mechanical protection and strength to the insulation boards, the manufacturing process involves multiple heating and consolidation steps, leading to higher costs and complexity.

It has now been found, that by using a specific binder composition for the nonwoven components of such composite materials the aforementioned problems can be solved and more flexible reinforcing nonwovens are manufactured. Furthermore, the complex manufacturing process could be streamlined. Exceeding the invented nonwoven will be used as back facer for ceiling tile of e.g. fibrous material.

### SUMMARY OF THE INVENTION

The present invention relates to a cover layer. Furthermore the invention relates to a fiber-based insulation product comprising at least one core layer comprising insulation material and at least one cover layer, preferably forming the outermost surface, comprising a nonwoven fiber mat, comprising mineral fibers and/or polymer fibers and a new binder composition comprising at least one polymer wax emulsion, preferably a thermoplastic emulsion, in particular the polymer wax emulsion being based on polyolefin and/or polyurethane (PU) and/or polyvinyl chloride (PVC) or polyethylene terephthalate (PET) or similar, and at least one base binder of polyvinyl alcohol or polyacrylate or polyvinyl acetate, or a combination thereof.

Such cover layers exhibit increased flexibility and improved handling capabilities, which is advantageous for the processing, e.g. adhering the cover layer respectively the facer onto an insulation layer. Furthermore, the cover layer shows water-repellent properties due to the waxy hydrophobic nature of the new binder composition.

Moreover, these properties are accompanied by an improved impact resistance of the cover layer, enhancing the durability and mechanical performance of the fiber-based insulation product.

In accordance with another aspect of the invention, a method is provided for manufacturing a fiber-based insulation product according to the invention.

### DETAILED DESCRIPTION OF THE INVENTION

The invention relates to a cover layer according to claim 1. Other aspects of the invention relate to a fiber-based insulation product according to claim 2 and a method for manufacturing a fiber-based insulation product according to claim 16. Embodiments of the invention are subject of claims 3 to 15 and claims 17 to 20.

Further features, details and advantages of the invention are apparent from the wording of the claims and from the following description of embodiments.

Subject matter of the present invention is a new fiber-based insulation product with a cover layer, preferably forming the outermost surface, comprising at least one nonwoven fiber mat, comprising mineral fibers and/or polymer fibers and a binder composition, wherein the binder composition comprises at least one polymer wax emulsion, preferably a thermoplastic emulsion, in particular the polymer wax emulsion is being based on polyolefin and/or polyurethane and/or PVC emulsions and/or PET or similar, and at least one base binder of polyvinyl alcohol, polyacrylate, or polyvinyl acetate, or a combination thereof.

The above binder composition is applied to a nonwoven fabric which then can be used for the production of a fiber-based insulation product, for example an insulation roll or board. The binder composition can also be applied during the manufacturing of the nonwoven fabric and can also be applied separately by a spray gun and/or bar on one side. Preferably the cover layer is adhered to the core layer which comprises the insulation material.

A particular advantage of the invention is that at minimum only two layers are needed, with the binder composition being applied, particularly in combination with the bonding process of the cover layer and the core layer being described, thus eliminating the additional step of laminating the layers in another separate production step or the need for additional surface forming layers. This is advantageous in many ways. Among other things, it saves material and costs and simplifies the manufacturing process.

The term "emulsion" as used herein refers to a disperse system with a liquid phase, the disperse phase, distributed in another liquid phase, the outer phase. An emulsion is a possible embodiment of a dispersion.

The term "nonwoven fabric" as used herein refers to the nonwoven fiber mat before being formed by use of the binder composition ("prefabricated product").

The new thermoplastic binder composition contains at least one so called base binder. The binder composition comprises such base binder together with at least one polymer wax emulsion, preferably a thermoplastic emulsion, in particular based upon a polyolefin emulsion, or a polyurethane based emulsion or PVC emulsions or PET or similar.

In one embodiment the fiber-based insulation product comprises a binder composition, wherein the emulsion wax comprises polypropylene (PP), polyethylene (PE), or a combination thereof.

The polymer wax emulsion is preferably selected from the group consisting of polypropene wax emulsions (PP wax), polyethene wax emulsions (PE Wax), polyethylene terephthalate wax emulsions (PET Wax), polyurethane wax emulsions (PU Wax), polyacrylate wax emulsions and mixtures thereof. The polypropene wax and the polyethene wax may be oxidized polypropene wax or oxidized poylethylene wax. The binder composition of the present invention can be applied to nonwoven fabrics which can be used for the manufacturing of composite materials. The binder composition can be applied during or after the forming of the nonwoven fabric. Preferably, the binder composition is used to form the nonwoven fabric to a nonwoven fiber mat.

The binder composition is applied to the nonwoven structure and then partly cured. The nonwoven structure comprising the binder can then be processed into composites.

The binder composition comprises at least one polymeric base binder comprising polyvinyl acetate (PVAc), polyacrylate, polyvinyl alcohol (PVA), starch, sugar derivatives, lignin or mixtures thereof, preferably comprising at least one PVAc and/or at least one polyacrylate. Base binder are aqueous polymeric binder, preferably binders based on polyvinyl emulsions, polyacrylate emulsions, aqueous polymer dispersions based on vinyl acetate and their mixtures. Such binders are usually cured at temperatures of ca. 150°C - 250°C in one step.

The use of a thermoplastic binder offers opportunities in view of recycling of such product. Whereas thermoset binder systems require pyrolysis at high temperatures, thermoplastic binder such as PP are meltable in a range between 200 C - 250 °C. Thus, this is an opportunity for recycling and sustainability, as the thermoplastic binder can be melted and reprocessed, unlike thermoset binders.

The polymer wax emulsion is preferably selected from the group consisting of polyolefin wax emulsions, polypropylene wax emulsions (polypropene wax emulsions, PP wax), polyethylene wax emulsions (polyethene wax emulsions, PE Wax), polyethylene terephthalate wax emulsions (PET Wax), polyurethane wax emulsions (PU Wax), acrylic wax emulsions and mixtures thereof. Due to the waxy hydrophobic nature of the new binder composition the cover layer exhibits a water repellent property, which improves the insulation products' resistance against water uptake or water vapor diffusion into the insulation material.

First internal tests were carried out to check the water repellent properties of the invention. When a drop of water was applied to the cover layer of a product according to this invention, it was found that the drop of water remained on the surface of the cover layer for a few seconds, while the water drop on a non-pressed nonwoven mat penetrated immediately.

In one embodiment the fiber-based insulation product comprises the binder, which further comprises a carbohydrate binder component selected from monosaccharide, disaccharide, trisaccharides, tetrasacharides, pentasaccharides and/or reaction products thereof, or a combination therof.

In one embodiment the fiber-based insulation product comprises at least one base polymer wax emulsion, which is colored by black pigments.

Preferably, the polymer wax emulsion comprises black pigments, for example with fine black carbon particles. When exposed to heat and some pressure, the copolymer softens and bonds well with another surface, preferably a core layer, to form a, preferably flat, composite.

The binder composition contains at least 10% polymer wax emulsion, based on the total solid content of the binder composition, preferably up to a value of approximately 75%. The optimum value depending on the binder used.

In one embodiment the fiber-based insulation product comprises at least one polymer wax emulsion, which has a solids content of 25 to 55% by weight, preferably 40 % by weight.

In one embodiment the binder composition comprises 5 to 70 % by weight, preferably 10 to 50 %, more preferably 20 % to 30 % by weight, most preferably 35 to 45% by weight of the polymer wax emulsion based on the total weight of the binder. In one embodiment the binder composition comprises a polymer wax emulsion having a solids content of 40 % by weight.

In one embodiment the fiber-based insulation product comprises at least one base binder, which has a solids content of 20 to 30 % by weight, preferably 25 % by weight.

In one embodiment the fiber-based insulation product the nonwoven fiber mat comprises at least 50 % of the mineral fibers and/or polymer fibers by weight.

In one embodiment the fiber-based insulation product comprises a nonwoven fiber mat, which comprises 15 to 35 % of the binder composition by weight, preferably 28 % by weight.

According to one embodiment the binder composition is present in the nonwoven fiber mat in a total amount of 5 to 80 % by weight of the total nonwoven fiber mat, preferably 10 to 40 % by weight, more preferably 22 to 30 % by weight. In one embodiment the composition may be present in the nonwoven fiber mat in a total amount of 28 % by weight of the total nonwoven fiber mat.

Preferably, the binder composition consists essentially of at least one base binder, and at least one polymer wax emulsion, preferably a thermoplastic emulsion, in particular the polymer wax emulsion is being based on polyolefin and/or polyurethane or PVC emulsions or PET emulsions or mixtures thereof. The thermoplastic polymer wax emulsion is chemically different from the base binder. Thermoplastic emulsions show a distinct three-dimensional crosslinking compared to polyvinyl or acrylic in solution.

Preferably the polymer wax emulsion is added to the preferably aqueous base binder before the application of the binder onto the nonwoven structure.

In general, most of the preferred polymer wax emulsions are commercially available. Examples are Byk Aquacer 1777, Byk Aquacer 1547 as well as the Addcomp products Priex 701, Priex 702 or Priex 703 (polypropylene emulsion). Other examples are PVC emulsions from Solvin Na-noVin or styrene-acrylic emulsions from Lubrizol or PE emulsions from Michelman or EASTEK 1200 PET emulsion. Usually, such emulsions comprise additional components such as additives, emulsifiers, stabilizers, etc.

As discussed later, the addition of the polymer wax emulsion, in particular for emulsions based on polyolefin and/or polyurethane, and/or PVC basis, to the base binder induces multiple benefits and effects. Besides a higher flexibility of the nonwoven fiber mat and less brittleness and dust, fiber-based insulation products made with these nonwoven fiber mats exhibit no or low VOCs and higher resistance when fire retardant additives used as second component. When using other emulsions similar effects can be observed regarding dust and brittleness. A polyolefin based polymer wax emulsion displays an excellent adherence to the insulation core without using further binder saving process steps.

However, in order to ensure the required strengths in the further working of the nonwoven fiber mat, other additional binders can also be introduced and/or known consolidation/mechanical strengthening methods, such as needling, can be used. In addition to the possibility of a mechanical strengthening, e.g. by calendaring or needling, in particular the hydrodynamic needling is also mentioned here. Chemical and/or thermoplastic binders are suitable as binders, as long as they are compatible to the binder composition according to the present invention.

### Fiber mat

The fiber-forming materials for the nonwoven fabric, preferably the cover layer forming the outermost surface, are preferably natural fibersand/or fibers of synthesized or natural polymers, ceramic fibers, mineral fibers, such as glass fibers, that can also be used in the form of mixtures. The nonwoven fabric can be formed of staple fibers or from filaments, that is, infinitely long fibers.

### Mineral- and ceramic fibers

Mineral- and ceramic fibers are preferably aluminosilicate fibers (glass fibers), ceramic fibers, dolomite fibers, wollastonite fibers or fibers of vulcanites, preferably basalt fibers, diabase fibers and/or melaphyr fibers. Daibases and melaphyrs are designated combined as paleobasalts and diabase is also often designated as greenstone. According to one embodiment the average length of the staple fibers in the nonwoven fabric of mineral fibers used is between 8 and 30 mm, preferably 10 to 30 mm. In a further embodiment of the invention the nonwoven fabric contains a mixture of endless fibers and staple fibers. The average fiber diameter of the mineral fibers preferably is between 6 and 25 µm, preferably between 8 and 24 µm, especially preferred between 8 and 15 µm. The weight per unit area of the nonwoven fabric of mineral fibers preferably is between 15 and 500 g/m², preferably between 30 and 250 g/m², wherein these data refer to a textile structure without any binders, additives or coatings.

### Glass fibers

In one embodiment the fiber-based insulation product comprises a nonwoven fiber mat, which comprises glass fibers.

Glass fibers for the nonwoven fabrics are particularly preferred. They are constructed from filaments, that is, infinitely long fibers or of staple fibers. Preferably the average length of the staple fibers is between 5 and 90 mm, preferably between 8 to 30 mm. In a further embodiment of the invention the glass fiber nonwoven fabric contains a mixture of endless fibers and staple fibers. The mean diameter of the glass fibers preferably is between 5 and 30 µm, preferably between 6 and 25 µm.

In addition to the previously cited diameters so-called glass microfibers can also be used. The preferred average diameter of the glass microfibers is between 0,1 and 5 µm. The microfibers forming the textile surface can also be present in mixtures with other fibers, preferably glass fibers. Moreover, a layer-shaped construction of microfibers and glass fibers is also possible.

In a further embodiment the nonwoven fabric can also additionally have a reinforcement of fibers, threads or filaments. Reinforcement threads are preferably multi-filaments or rovings based on glass, polyester, carbon or metal. The reinforcement threads can be used as such or also in the form of a textile surface structure, e.g., as fabric, laying, knitted fabric, knitwear or nonwoven fabric or scrims. The reinforcements preferably consist of a parallel thread sheet or of a laying.

The weight per unit area of the nonwoven fabric of glass fibers preferably is between 15 and 500 g/m2, preferably between 40 and 250 g/m2, wherein the data refers to a surface structure without any binders, additives or coatings.

Suitable glass fibers comprise - among others - those manufactured from A-glass, C-glass, E-glass, S-glass, T-glass or R-glass.

Preferably the nonwoven fabric comprises glass or polymer fibers or a mixture thereof, preferably glass fibers.

The nonwoven fabric, preferably comprises glass fibers having a mean diameter between 6 and 25 µm and preferably a length between 8 and 30 mm. The nonwoven fiber mat preferably has a thickness between 0,1 and 10 mm, preferably between 0,2 and 0,6 mm. In a further embodiment an average weight is between 10 and 300 g/sqm, most preferably between 20 and 150 g/sqm.

The nonwoven fabric preferably comprises mineral fibers such as C-glass fibers, E-glass fibers, S-glass fibers, T-glass fibers, aluminosilicate fibers, ceramic fibers, dolomite fibers, wollastonite fibers or fibers of vulcanites, preferably basalt fibers, diabase fibers, melaphyr fibers, more preferably basalt fibers or a combination thereof, preferably C-glass, E-glass, S-Glass, T-Glass or a mixture thereof.

### Polymer fibers

Among the nonwoven fabric of fibers of synthetic polymers, nonwoven fabrics, especially so-called spun bonds, that is, spunbonded nonwoven fabrics produced by a tangled deposit of melt-spun filaments are preferred. Preferred they consist of endless synthetic fibers of melt-spinnable polymer materials. Suitable polymer materials are, e.g., polyamides such as, e.g., polyhexamethylene diadipamide, polycaprolactam, aromatic or partially aromatic polyamides ("aramids"), aliphatic polyamides such as, e.g., nylon, partially aromatic or fully aromatic polyesters, polyphenylene sulfide (PPS), polymers with ether- and keto groups such as, e.g., polyetherketones (PEK) and polyetheretherketone (PEEK), polyolefins such as, e.g., polyethylene or polypropylene, cellulose or polybenzimidazoles. In addition to or alternatively to the previously cited synthetic polymers, those polymers are also suited that are spun from solution.

The spunbonded nonwoven fabrics preferably consist of melt-spinnable polyesters. In principle, all known types of polyester material suitable for the manufacture of fibers are considered as polyester material. Polyesters containing at least 95 mole % polyethyleneterephthalate (PET), especially those of unmodified PET, are especially preferable. When calandered Spunbond are made a spray gun and infra-red dryer may installed.

If the composite materials in accordance with the invention should additionally have a flame-retardant action, it is advantageous if they were spun from polyesters modified in a flame-retardant manner. Such polyesters modified in a flame-retardant manner are known.

The individual titers of the polyester filaments in the spunbonded nonwoven fabric preferably are between 1 and 16 dtex, preferably between 2 to 10 dtex.

In a further embodiment of the invention the spunbonded nonwoven fabric can also be a bonded fiber fabric hardened by melt binder and preferably which contains carrier fibers and / or melded fibers. The carrier fibers and melded fibers can be derived from any thermoplastic, fiber-forming polymers. Such spunbonded nonwoven fabrics hardened by melt binder are described, e.g., in EP 0 446 822 A1 and EP 0 590 629 A1. In addition to endless filaments (spunbond method) the textile nonwoven surface can also be constructed of staple fibers or mixtures of staple fibers and endless filaments. The individual titers of the staple fibers in the nonwoven fabric preferably are between 1 and 16 dtex, preferably between 2 to 10 dtex. The staple length preferably is 1 to 100 mm, preferably 2 to 500 mm, especially preferably 2 to 30 mm. The nonwoven fabric can also be constructed of fibers of different materials in order to be able to achieve special properties.

The nonwoven fabric can also additionally have a reinforcement of fibers, threads or filaments. Multi-filaments or rovings based on glass, polyester, carbon or metal, or a combination thereof, are preferred as reinforcement threads. The reinforcement threads can be used as such or also in the form of a textile surface structure, e.g., as fabric, laying, knitted fabric, knitwear or nonwoven fabric. The reinforcements preferably consist of a parallel thread sheet or a laying.

The filaments and/or staple fibers constructing the bonded fiber fabric can have a practically round cross-section or also other forms such as dumbbell-shaped, kidneyshaped, triangular or tri- or multi-lobed cross-sections. Hollow fibers and bi-or multi component fibers can also be used. Furthermore, the melded fibers can also be used in the form of bi-component or multicomponent fibers.

The fibers forming the nonwoven fabric can be modified by customary additives, e.g., by antistatic agents such as carbon black.

The weight per unit area of the nonwoven fabric of fibers of synthetic polymers preferably is between 10 and 500 g/m², preferably between 20 and 250 g/m², wherein the data refers to a surface structure without any binders, additives or coatings.

### Natural polymer fibers

The natural fibers are vegetable fibers, e.g., fibers derived from grasses, straw, wood, bamboo, reed and bast, or fibers of animal origin. Plant fibers is a collective concept and stands for seed fibers such as cotton, kapok or poplar fluff, bast fibers such as bamboo fiber, hemp, jute, linen or ramie, hart fibers such as sisal or manila, or fruit fibers such as coconut. Fibers of animal origin are wools, animal hairs, feathers and silks. The weight per unit area of the nonwoven fabric of natural fibers preferably is between 20 and 500 g/m2, preferably between 40 and 250 g/m2, wherein the data refers to a surface structure without any binders, additives or coatings.

The textile surfaces of fibers of natural polymers preferably are cellulose fibers such as viscose or vegetable or animal protein fibers.

Among the textile surfaces of cellulose fibers nonwoven fabrics are especially preferred. They are constructed from filaments, that is, infinitely long fibers and/or from staple fibers. The average length of the staple fibers preferably is between 1 and 25 mm, preferably 2 to 5 mm.

The average diameter of the cellulose fibers preferably is between 5 and 50 µm, preferably between 15 and 30 µm.

### Binder application

The application of the binder composition according to the present invention onto the nonwoven fibers can take place with the aid of all known methods. In addition to or alternatively to spraying on, impregnating and pressing in, the binder can also be applied by coating or by rotary nozzle heads. If following the inline process path binder composition according to the present invention can also be part of the white water or any other aqueous means used for the production of the nonwoven layer.

A further preferred method is the application of the new binder composition according to the present invention by the application of foam. In the application of foam binder foam is produced with the aid of a foaming agent in a foam mixer that is applied by suitable coating aggregates onto the nonwoven fabric. The application can also take place here by rotary nozzle heads.

In the foam coating binder composition there are basically no limitations regarding the foaming agent. Preferred foaming agents are ammonium stearates or succinic acid esters added with 1 to 5% by weight in dry mass to the binder. Furthermore, the already described catalysts are mixed in if required. The solids content of the foam preferably is at least 40 %, preferably at least 50 %.

The total binder content in the nonwoven fabric preferably is between 10 and 80 % based on total weight of the dried surface structure and includes all applied binder components and additives.

### Functional Materials

In one embodiment the fiber-based insulation product comprises a binder composition, which comprises corrosion inhibitors, crosslinking density enhancers, biocides, or a combination thereof.

The composite material comprising the binder composition can contain additives and/or functional materials. The additives and functional material can be applied at the same time with the binder composition, e.g., as mixture or as individual components, or before or after the application of the binder composition. In as far as the binder composition is applied by foam application it is advantageous to apply the functional material with the foam or distributed in the foam or to apply the functional material onto the still fresh foam.

In order to fix the functional materials a binder can be additionally added for fixing the functional materials on the nonwoven fabric. The content of functional material is determined by the subsequent use.

The application of the functional material used takes place as a function of the nature of the particular functional material by known techniques. The application can also take place by rotary nozzle heads.

The functional material is preferably flame proofing agents, materials for discharging electrostatic charges, materials for screening off electromagnetic rays, organic or inorganic pigments, especially colored pigments, materials that increase the resistance to wear and/or slippage. The functional materials are preferably arranged on the side of the nonwoven fabric and can at least partially pass through the nonwoven fabric.

In a variant of the method an additional binder is added to fix the functional materials on the nonwoven layer. The same binder (B-stage binder) as is present in the nonwoven layer is preferably selected here. The content of functional materials is determined by the subsequent use.

### Flame proofing agents

Preferably the flame proofing agents are inorganic flame proofing agents, organophosphorus flame proofing agents, nitrogen-based flame proofing agents or intumescences flame proofing agents. Halogenated (brominated and chlorinated) flame proofing agents can also be used but are less preferred on account of their risk evaluation. Examples for such halogenated flame proofing agents are polybrominated diphenylether, e.g., decaBDE, tetrabromobisphenol A and HBCD (hexabromocyclododecane).

The nitrogen-based flame proofing agents preferably are melamines and urea.

The organophosphorus flame proofing agents are typically aromatic and alkyl esters of phosphoric acid. TCEP (trischloroethylphosphate), TCCP (trischloropropylphosphate), TDCCP (tris-dichloroisopropylphosphate), triphenylphosphate, trioctylphosphate (tris-(2-ethylhexyl) phosphate) are preferably used.

The inorganic flame proofing agents are typically hydroxides such as aluminum hydroxide and magnesium hydroxide, borates such as zinc borate, ammonium compounds such as ammonium sulfate, red phosphorus, antimony oxides such as antimony trioxide and antimony pentoxide and/or laminated silicates such as vermiculite. In addition, preferred agents are expandable graphite.

### Antistatic agents

Antistatic- and electromagnetic screening effects can be achieved by the use of agents for raising the electrical conductivity.

The antistatic agents are usually particles that are electrically conductive. Suitable materials are electrically conductive carbons such as carbon black, graphite and carbon nanotubes (C-nanotubes), conductive plastics or fibers of metal or metallic components.

The materials for screening electromagnetic rays are usually electrically conductive materials. They can be built up in the form of foils, particles, fibers or wires and/or textiles surface structures of the previously cited materials.

### Fillers

Fillers are materials such as CaCO₃, coated CaCO₃, coated or uncoated Kaolin, talcum, gypsum or silica, etc., and preferably can be used as components of the binder composition.

### Pigments

The inorganic or organic pigments are particulate materials. In addition to fillers such as CaCO₃, talcum, gypsum or silica, the pigments, to the extent that they should increase the value of the composite material, are in particular pigments that can be used in colors.

### Hydrophobic agents

Hydrohobic agents are additives which are able to increase or modify the compatibility of the B-stage binder composition to the carrier or the nonwoven fabric. According to one embodiment of the fiber-based insulation product prominent but not limiting examples are fluorine or silane containing components which can greatly improve the compatibility of the binder to metal and glass surfaces.

### Insulation core

In one embodiment the insulation material is a mineral fiber-based insulation product, in another embodiment it comprises a polyurethane foam core, other chemical compatible foams, or a combination thereof. These insulation cores typically consist of a core polymeric foamed thermoset material, such as polyurethane, polyisocyanurate, or phenolic resin, or the like. Also, the use of polystyrene foam (expanded Polystyrene (EPS) or extruded Polystyrene (XPS)), polyisocyanurate (PIR) foam, phenolic foam, melamine foam or spray foam is conceivable. Additional to or alternatively to the foamed products described, wool products, preferably mineral wool materials, are used as insulation material for the insulation core layer.

### Method of manufacturing a semi-finished composite material

Another subject matter of the present invention is a method for the manufacture of a semifinished composite material comprising the measures:
a) Supplying of a nonwoven fabric, whereas the nonwoven fabric optionally has received a pre-strengthening,
b) Application of at least one binder composition comprising at least one base binder and at least one polymer wax emulsion, preferably a thermoplastic emulsion, in particular the emulsion is being based on polyolefin and/or polyurethane or PVC emulsions or PET,
c) Optionally applying at least one functional material to the nonwoven fabric according to b),
d) Drying the nonwoven fabric.

The nonwoven fabric in measure a) has preferred an additional pre-strengthening treatment as already described above. However, it is also possible to apply the binder composition according to the present invention to the nonwoven fabric during its formation. In this so-called in-line process measures steps a) and b) are carried out simultaneously at the same time during the formation of the nonwoven fabric. The inline process does not necessarily require pre-strengthening means if the base binder composition itself can provide sufficient binding strength.

The application of the binder in step b) can be accomplished as described above. Optionally, functional materials can be applied. The functional materials can be applied together with the binder or after the application of the binder. The subsequent drying step d) removes the water and cures the base binder.

The temperature and duration of the drying step d) depends on the materials used, the process, and the planned applications. It is particularly important to set the temperature and drying duration according to the required degree of curing binder composition. E.g. a polyolefin binder cures at 150 °C and the base binder at 200 °C.

The process results in a semi-finished product, comprising a nonwoven, binder composition according to the present invention, and optionally functional materials. In particular the semi-finished product can be used for the manufacturing of a fiber-based insulation product.

### Methods of manufacturing composites

Another subject matter of the present invention is a method for manufacturing a fiber-based insulation product, wherein the method comprises the steps of
a) Providing
   i. mineral fibers in an aqueous fiber slurry in a wet laid process onto a transport belt or
   ii. providing PET fibers or mixtures of PET fibers with mineral fibers in an aqueous fiber slurry in a wet laid process onto a transport belt,
b) Removing white water at least partly,
c) Applying a thermoplastic binder composition comprising at least one aqueous thermoplastic binder and 25 to 75 % by weight of at least one polymer wax emulsion based on the total weight of the binder,
d) Drying the resulting glass fiber nonwoven,
e) Laminating an insulation core layer to the glass fiber nonwoven at a temperature of between 100 to 250 °C at a pressure of between 1 and 40 bar.

Preferably the thermoplastic binder composition in step c) is applied by curtain coating or sprayed on one side.

In a preferred manufacturing process the binder composition is applied during manufacturing of the composite whereas one oven heat consolidation (the adhesion process being combined with the new binder consolidation) can be saved. Alternatively, nonwoven fiber mat and insulation core are adhered by heat pressing. Also, according to the alternative method no oven consolidation is required as the binder can solely locally be remelted via e.g. a heated roll and pressed onto the insulation core for adherence.

A streamlined manufacturing process by combining the adhesion process with the binder consolidation, potentially eliminating the need for separate oven consolidation steps, leads to cost savings and reduced manufacturing complexity.

Another subject matter of the present invention is a method for manufacturing a fiber-based insulation product, wherein the method comprises the steps of
a) Applying a binder composition to mineral fibers and/or polymer fibers, wherein the binder composition comprises
   i. at least one polymer wax emulsion and
   ii. at least one base binder of polyvinyl alcohol, polyacrylate, or polyvinyl acetate, or a combination thereof,
b) Curing or drying of the resulting nonwoven fiber mat,
c) Adhering the nonwoven fiber mat to an insulation core layer
   i. by at least locally remelting the binder composition and
   ii. pressing the nonwoven fiber mat onto the insulation core layer.

Preferably the nonwoven fiber mat is manufactured by applying the binder composition to glass fibers, followed by curing or drying, preferably at a temperature of 160 to 230 °C, preferably 210 to 220 °C, to form a bonded mat structure.

The binder composition can be applied using techniques such as curtain coating, spraying, or other conventional methods.

According to a preferred embodiment the fiber-based insulation product comprises a core layer, which is adhered to the nonwoven fiber mat by at least locally remelted binder composition.

The nonwoven fiber mat particularly can be adhered to an insulation core layer by heat pressing, where the binder composition is locally remelted and pressed onto the insulation core layer, preferably at a temperature of 180 °C. Preferably, the pressing takes place under a pressure of 100 N/cm². This process eliminates the need for separate oven consolidation steps, streamlining the manufacturing process.

In one embodiment the nonwoven fiber mat, especially according to the aforementioned step c) ii. (Adhering the nonwoven fiber mat), is pressed onto the core layer using pressure of 1 to 400 N/cm², preferably 50 to 200 N/cm², most preferably 100 N/cm².

In one embodiment the nonwoven fiber mat, especially according to the aforementioned step c) ii. (Adhering the nonwoven fiber mat), is pressed onto the core layer at a temperature of 100 to 250 °C, preferably of 150 to 230 °C, most preferably 180°C.

### Examples

### Example 1

A nonwoven glass fiber mat comprising the binder composition of the present invention was prepared as follows. A blend of chopped ECR (E-Glass Corrosion Resistant) glass fibers, comprising 70 % of 18 mm long and 13 µm diameter fibers and 30 % of 10 mm long and 10 µm diameter fibers, were formed into a web of randomly oriented fibers using a wet-laid process. A binder composition comprising (i) a polymer wax emulsion of a polypropylene emulsion having a solids content of 40 % by weight, and (ii) a base binder of polyvinyl alcohol having a solids content of 20 % by weight, was applied to the web by a curtain coater. The weight ratio of the polypropylene emulsion to the polyvinyl alcohol was 2:1. The binder composition was cured using an oven at a temperature of 220 °C for 15 seconds. The resulting nonwoven fiber mat had a basis weight of 0,02 lb/ft² (100 gsm) and contained about 25 % by weight solids of the binder composition based on the total weight of the nonwoven fiber mat.

### Example 2

A nonwoven glass fiber mat comprising the binder composition of the present invention was prepared as follows. A blend of chopped ECR glass fibers, comprising 60 % of 16 mm long and 11 µm diameter fibers and 40 % of 8 mm long and 9 µm diameter fibers, were formed into a web of randomly oriented fibers using an air-laid process. A binder composition comprising (i) a polymer wax emulsion of a polyurethane emulsion having a solids content of 35 % by weight, and (ii) a base binder of polyacrylate having a solids content of 25 % by weight, was applied to the web by spraying. The weight ratio of the polyurethane emulsion to the polyacrylate was 1,5:1. The binder composition was cured using an oven at a temperature of 210 °C for 20 seconds. The resulting nonwoven fiber mat had a basis weight of 0,018 lb/ft² (90 gsm) and contained about 22 % by weight solids of the binder composition based on the total weight of the nonwoven fiber mat.

### Example 3

A nonwoven glass fiber mat comprising the binder composition of the present invention was prepared as follows. A blend of chopped ECR glass fibers, comprising 65 % of 20 mm long and 14 µm diameter fibers and 35 % of 12 mm long and 11 µm diameter fibers, were formed into a web of randomly oriented fibers using a wet-laid process. A binder composition comprising (i) a polymer wax emulsion of a polyvinyl chloride emulsion having a solids content of 45 % by weight, and (ii) a base binder of polyvinyl acetate having a solids content of 30 % by weight, was applied to the web by a curtain coater. The weight ratio of the polyvinyl chloride emulsion to the polyvinyl acetate was 1,8:1. The binder composition was cured using an oven at a temperature of 230 °C for 18 seconds. The resulting nonwoven fiber mat had a basis weight of 0,024 lb/ft² (120 gsm) and contained about 28 % by weight solids of the binder composition based on the total weight of the nonwoven fiber mat.

### Example 4

An example of the invention is a fiber-based insulation product comprising of 30 % thermoplastic binder and 70 % glass fiber, preferably in addition to an aluminum foil (percentages without the weight of the aluminium foil). The binder was a mixture of PP and an acrylic system. A press temperature of 180 °C at a pressure of 100 N/cm² at a pressure time of 90 seconds has been used.

The following Table 1 shows examples of different binder compositions used in the context of a product according to the invention.

**Table 1 Composition of nonwoven layers binder and fiber, 1-5 comparative examples, 6-11 according to the invention and properties of the nonwoven layer**

| **Example No.** | **Binder composition** | **Glass fiber type First staple glass fibers** | **Glass fiber type Second staple glass fibers** |
|---|---|---|---|
| 1 | anionic emulsion of an oxidized HD polyethylene wax*/ Water 1:1 | 100% TRE | -- |
| | | 12,5/18 | |
| 2 | anionic emulsion of an oxidized HD polyethylene wax* / Water 1:1,5 | 100% TRE | - |
| | | 12,5/18 | |
| 3 | anionic emulsion of an oxidized HD polyethylene wax*/ Water 1:1,5 | 80% TRE | 20% TRE |
| | | 12,5/18 | 11/12 |
| 4 | anionic emulsion of an oxidized HD polyethylene wax*/ Water 1:1,5 | 80% TRE | 20% TRE |
| | | 12,5/18 | 11/12 |
| 5 | anionic emulsion of an oxidized HD polyethylene wax* / Water 1:1,5 | 80% TRE | 20% TRE |
| | | 12,5/18 | 11/12 |
| 6 | aqueous polyvinyl acetate emulsion+ 70%x/ anionic emulsion of an oxidized HD polyethylene wax* 30% | 80% TRE | 20% TRE |
| | | 12,5/18 | 11/12 |
| 7 | aqueous polyvinyl acetate emulsion+ 70%x/ anionic emulsion of an oxidized HD polyethylene wax*30% | 80% TRE | 20% TRE |
| | | 12,5/18 | 11/12 |
| 8 | aqueous polyvinyl acetate emulsion+ 50%x/ anionic emulsion of an oxidized HD polyethylene wax*50% | 80% TRE | 20% TRE |
| | | 12,5/18 | 11/12 |
| 9 | aqueous polyvinyl acetate emulsion+ 50%x/ anionic emulsion of an oxidized HD polyethylene wax* | 80% TRE | 20% TRE |
| | | 12,5/18 | 11/12 |
| 10 | aqueous polyvinyl acetate emulsion+ 30%x/ anionic emulsion of an oxidized HD polyethylene wax*70% | 80% TRE | 20% TRE |
| | | 12,5/18 | 11/12 |
| 11 | aqueous polyvinyl acetate emulsion+ 30%x/ anionic emulsion of an oxidized HD polyethylene wax*70% | 80% TRE | 20% TRE |
| | | 12,5/18 | 11/12 |

| | | | |
|---|---|---|---|
| *Aquacer 1547 from BYK-Chemie GmbH having 35 % by wt. non volatile content + Mowolith DN 60 from Celanese Sales Germany GmbH having 59 - 61 % solid content | | | |

According to example 1 to example 5 of the exemplary embodiments in Table 1 an 10 anionic emulsion of an oxidized HDPE wax (Aquacer^{®} 1547) was dispersed in water and applied to the glass staple fiber web. Aquacer^{®} 1547 sold by BYK-Chemie GmbH is a HDPE-based wax emulsion, namely an anionic emulsion of an oxidized HD polyethylene wax. The non-volatile matter content at (60 min., 125 °C) is 35 % by weight. It forms a dispersion in water. The melting point of the wax content is 125 °C and the viscosity is 40 15 mPa·s at 23 °C and a stirring rate of D=400/s. The pH value is 9,7. Examples 1 to 5 are comparative examples as the binder composition only comprises a polymer wax emulsion but no additional binder component.

According to example 6 to example 11 of the exemplary embodiments in Table 1 the 20 HDPE wax emulsion (Aquacer^{®} 1547) was mixed with an aqueous polyvinyl acetate emulsion (Mowolith^{®} DN 60) in different ratios and applied to the glass staple fiber web. Mowilith^{®} DN 60 is an aqueous polymer dispersion based on vinyl acetate and stabilized by polyvinyl alcohol sold by Celanese Sales Germany GmbH. Mowolith^{®} DN 60 has a solids content at (130 °C; 30 min - ISO 3251) of between 59 - 61 %. It has a Brookfield 25 viscosity at (25 °C; 6/20 - ISO 2555) of between 10000 - 18000 mPa·s. The pH value is between 4,0 to 6,0 in a 1:1 water dilution. It has a glass transition temperature according to ISO 16805 of approx. 38°C.

The glass fibers nonwoven comprised between 80 % and 100 % of E- glass fibers having 30 an average diameter of 12,5 µm and a length of 18 mm and between 20 % and 0 % of E- glass fibers having an average diameter of 11 µm and a length of 12 mm. Non woven fiber webs or mats with an area weight of between 40,5 g/m² to 152 g/m² were produced.

Specific details are given in the description to provide a thorough understanding of the embodiments. However, it will be understood by one of ordinary skill in the art that the embodiments may be practiced without these specific details. For example, well-known materials and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing embodiments of the invention. Various changes may be made in the function and arrangement of elements without departing from the spirit and scope of the invention.

## Claims

1. Cover layer comprising at least one nonwoven fiber mat, comprising mineral fibers and/or polymer fibers and a binder composition, wherein the binder composition comprises
(i) at least one polymer wax emulsion and
(ii) at least one base binder of polyvinyl alcohol, polyacrylate, or polyvinyl acetate, or a combination thereof.

2. Fiber-based insulation product comprising
- at least one core layer comprising an insulation material, and
- at least one cover layer, preferably forming the outermost surface, comprising at least one nonwoven fiber mat, comprising mineral fibers and/or polymer fibers and a binder composition, wherein the binder composition comprises
(i) at least one polymer wax emulsion and
(ii) at least one base binder of polyvinyl alcohol, polyacrylate, or polyvinyl acetate, or a combination thereof.

3. Fiber-based insulation product according to claim 2, wherein the binder further comprises a carbohydrate binder component selected from monosaccharide, disaccharide, trisaccharides, tetrasacharides, pentasaccharides and/or reaction products thereof, or a combination therof.

4. Fiber-based insulation product according to claim 2 or 3, wherein the at least one polymer wax emulsion is a thermoplastic emulsion.

5. Fiber-based insulation product according to claim 4, wherein the thermoplastic emulsion is based on polyolefin, polyurethane (PU), polyvinyl chloride (PVC), polyethylene terephthalate (PET), or a combination thereof.

6. Fiber-based insulation product according to claim 5, wherein the polyolefin is polypropylene (PP), polyethylene (PE), or a combination thereof.

7. Fiber-based insulation product according to one of the claims 2 to 6, wherein the at least one base polymer wax emulsion is colored by black pigments.

8. Fiber-based insulation product according to one of the claims 2 to 7, wherein the at least one polymer wax emulsion has a solids content of 25 to 55 % by weight, preferably 40 % by weight.

9. Fiber-based insulation product according to one of the claims 2 to 8, wherein the at least one base binder has a solids content of 20 to 30 % by weight, preferably 25 % by weight.

10. Fiber-based insulation product according to one of the claims 2 to 9, wherein the binder composition further comprises corrosion inhibitors, crosslinking density enhancers, biocides, or a combination thereof.

11. Fiber-based insulation product according to one of the claims 2 to 10, wherein the nonwoven fiber mat comprises at least 50 % of the mineral fibers and/or polymer fibers by weight.

12. Fiber-based insulation product according to one of the claims 2 to 11, wherein the nonwoven fiber mat comprises glass fibers.

13. Fiber-based insulation product according to one of the claims 2 to 12, wherein the nonwoven fiber mat comprises 15 to 35 % of the binder composition by weight, preferably 28 % by weight.

14. Fiber-based insulation product according to one of the claims 2 to 13, wherein the insulation material comprises a polyurethane foam and/or a wool material.

15. Fiber-based insulation product according to one of the claims 2 to 14, wherein the core layer is adhered to the nonwoven fiber mat by at least locally remelted binder composition.

16. Method for manufacturing a fiber-based insulation product, preferably a fiber-based insulation product according to one of the preceding claims, wherein the method comprises the steps of
a) Applying a binder composition to mineral fibers and/or polymer fibers, whereby the binder comprises
i. at least one polymer wax emulsion and
ii. at least one base binder of polyvinyl alcohol, polyacrylate, or polyvinyl acetate, or a combination thereof,
b) Curing or drying of the resulting nonwoven fiber mat,
c) Adhering the nonwoven fiber mat to a core layer
i. by at least locally remelting the binder composition and
ii. pressing the nonwoven fiber mat onto the core layer.

17. Method according to claim 16, wherein the binder composition in step a) is applied by curtain coating or sprayed.

18. Method according to claim 16 or 17, wherein the nonwoven fiber mat in step b) is cured at a temperature of 160 to 230 °C, preferably 210 to 220 °C.

19. Method according to one of the claims 16 to 18, wherein the nonwoven fiber mat in step c) ii. is pressed onto the core layer at a temperature of 100 to 250 °C, preferably 150 to 230 °C, most preferably 180 °C.

20. Method according to one of the claims 16 to 19, wherein the nonwoven fiber mat in step c) ii. is pressed onto the core layer using a pressure of 1 to 400 N/cm², preferably 50 to 200 N/cm², most preferably 100 N/cm².
